# EUROPEAN PATENT APPLICATION

(11) **EP 2 224 385 A1**
(43) Date of publication of application: **01.09.2010**
(21) Application number: 09153627.6
(22) Date of filing: 25.02.2009
(51) Int. Cl.: G06Q 10/00

(54) **System and method for blocking objectionable communications in a social network**

(71) Applicant: RESEARCH IN MOTION LIMITED, Waterloo, Ontario N2L 3W8 (CA)
(72) Inventor: Wormald, Chris, Waterloo, Ontario N2L 3W8 (CA); Reddy, Raymond, Waterloo, Ontario N2L 3W8 (CA)
(74) Representative: Fennell, Gareth Charles

(57) **Abstract**

A system and method blocks objectionable in a social network. A first user of the social network determines when communications from a second user to the first user that are displayed and viewed by third party users of the social network are objectionable. In response, the first user blocks further display of communications from the second user to the first user that were intended by the second user to be displayed and viewed by third party users of the social network.

## Description

### Technical Field

The present disclosure relates to the field of communications systems, and more particularly, to communications in a social network.

### Background

Social networking sites, for example, Facebook™, MySpace™, and similar social network, sites as well as Instant Messaging systems, online chat room and bulletin boards, often have private and public communications that are viewable not only by the immediate users, but also by third party users of the social network or Instant Messaging system. These users could be approved or designated friends by a first user to communicate and view other communications from similarly designated friends.

Often in a social network site or Instant Messaging system, a rogue user will write or text an inappropriate message or do an annoying action, such as engaging in an incorrect "poke" to annoy a user or publicly post an unsavory comment about the user,

For example, a first user could have a message wall as in Facebook™ in which the communications from a second user to the first user are displayed and can be viewed by third party users of the social network. The second user may post on this wall inappropriate or objectionable messages, If the messages are private messages only intended for the first user, then the first user may not be overly bothered. If the messages are public messages to be viewed by others such as the third party users, however, then the first user may consider these messages inappropriate for public consumption. Similar instances can occur in an Instant Messaging system in which messages from a second user to the first user are inappropriate and the first user does not want other third party users to see the inappropriate messages and inappropriate content.

One technical solution to this problem of inappropriate messages being posted by the second user on the wall of the first user is to no longer designate the second user as a friend. When this occurs, the second user may not view or post messages on the wall of the first user. This solution could have issues if the second user as a friend is a family member or longstanding close friend who only needs the inappropriate behavior modified in an appropriate manner while discontinuing any public posting of such inappropriate messages and communications.

### Summary

Generally speaking, a method and system, in accordance with non-limiting examples, blocks objectionable communications in a social network or other similar communications network such as an Instant Messaging network where a second user communicates with a first user such as by communications posted on a wall to be viewed by other third party users of the system. These users could all be designated friends. The social network communications could also refer to wall posting and Instant Messaging. In one aspect, a first user of the social network determines when communications from a second user to the first user that are displayed and viewed by third party users of the social network are objectionable. In response, the first user blocks further display of communications from the second user to the first user that were intended by the second user to be displayed and viewed by third party users of the social network,

The second user is typically an approved user designated by the first user to display communications to the third party users. The approved second user is typically a friend designated by the first user. Third party users typically also are approved users designated by the first user, and typically are designated as friends in some social networks, such as Facebook™ as a non-limiting example.

In one aspect, the communications system includes a social network server that is configured to provide a user interface for the social network communications and allow the first user to receive the communications from the second user that are displayed and viewed by third party users of the social network. A communications module can communicate with the first and second users and the third party users such as through a communications network, e.g., an internet, and receive a blocking request from the first user and communicate the blocking request to the social network server for blocking further display to the third party users of communications from the second user to the first user that are intended to be displayed and viewed by third party users.

It is possible to display any further communications from the second user only to the first user, while blocking further display of those communications to the third party users. These communications from the second user to the first user could include communications posted on a wall of the first user or texting by instant Messaging. In one aspect, the second user can be blocked for a predetermined period of time. This allows further display of communications from the second user to the first user to be viewed by the third party users after the predetermined period of time has passed. In another aspect, an indication can be sent to the second user that the communications to the first user that are intended to be displayed to other third party users has been blocked and can no longer be viewed. This indication could be an indication that the second user has been placed in a penalty box status. Graphics could be established from the social network server to be viewed on user displays, such as on a personal computer or portable wireless communications device, showing a penalty box status. The graphics could be public or private, making the penalty box status a private or public punishment depending on what action is desired by the first user.

The communications between first and second users could be Instant Messaging communications as part of a social network or as part of another Instant Messaging communications system. A computer readable medium is also set forth.

### Brief Description of the Drawings

Other objects, features and advantages of the present invention will become apparent from the detailed description which follows, when considered in light of the accompanying drawings in which:

FIG. 1 is a flow diagram illustrating basic aspects of a method for blocking objectionable communications in a social network, or similar communications network in accordance with a non-limiting example,

FIG. 2 is a high-level block diagram showing a communications system that includes a social network server with Instant Messaging functionality, a communications network and various first, second and third party users of the social network in accordance with a non-limiting example;

FIG. 3 is a representation of a social network site user interface showing a penalty box as a non-limiting example; and

FIG. 4 is a schematic block diagram illustrating example components of a mobile wireless communications device that could be used with the system as described relative to FIGS. 1-3.

### Detailed Description

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout.

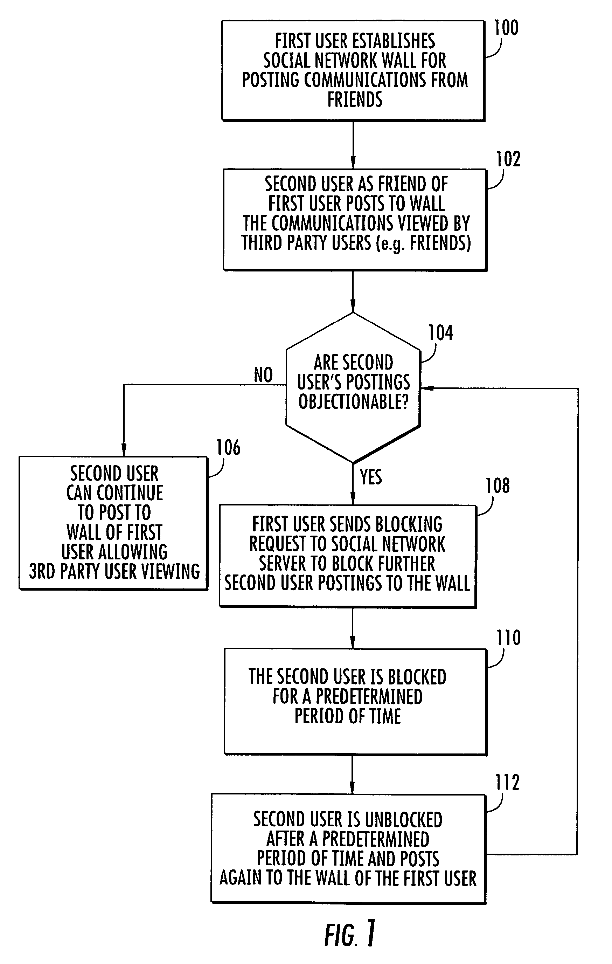

FIG. 1 is a high-level flowchart of an example of a method used for blocking objectionable communications in a communications network such as the example social network described above. As shown, a first user establishes a social network wall for posting and viewing communications from friends (block 100). Certain users are designated as friends by the first user. These friends can post to the wall. A second user as a friend posts communications to the wall of the first user that are viewed by third party users, for example, friends of the first user (block 102). A determination is made whether the communications from the second user are objectionable to the first user (block 104). This determination can be automatic based on predetermined criteria such as preference settings established by the first user. For instance, messages containing a particular word could be automatically determined as objectionable by the social network server. The user can control the objectionable vocabulary through preference settings in a penalty box or other user interface. It is also possible for the first user to make an objection on-the-fly as to the content and communications that are objectionable based on predetermined criteria that the user decides at that moment and in response send a request to the social network server to block communications as explained below. If the communications from the second user are not objectionable, the second user can continue posting communications to the wall of the first user. This allows viewing by the third party users (block 106).

If the communications from the second user, however, are objectionable, the first user sends a blocking request to the social network server to block the second user from posting further communications to the wall of the first user (block 108). It should be understood that blocking requests can be accomplished at the request of the first user or it can be accomplished automatically by the social network server based on the first user's predetermined criteria, such as preference settings. The second user is blocked for a predetermined period of time (block 110), which can vary from a few to 48 hours, for example, to longer periods of time. During that time, the first user may not wish to view any posts from the second user or view additional posts, while third party users cannot view these posts. After the predetermined period of time has lapsed, the second user is unblocked and is allowed to post again to the wall of the first user (block 112). The process then repeats with step 104 and the first user (or server) again determines if the second user's communications are objectionable. Although the process would continue with the blocking and unblocking steps as described, it could be that if on the second repetition the second user's communications are objectionable, 1 the blocking action can occur for a much longer predetermined period of time or the second user can be permanently blocked.

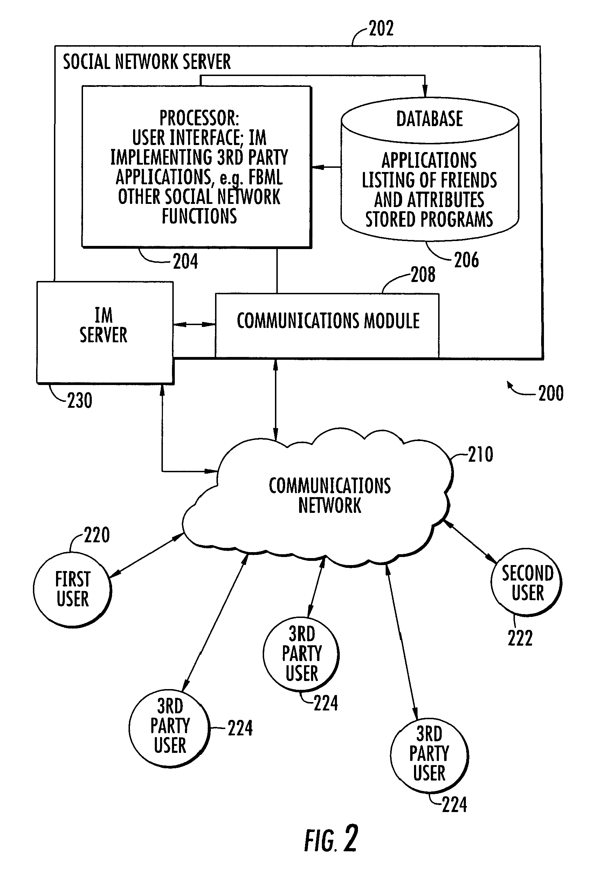

FIG. 2 illustrates a communications system **200**, in accordance with a non-limiting example, that can incorporate the method as described relative to FIG. 1, This communications system **200** could be for a social network or Instant Messaging or a combination of both. As illustrated, a social network server **202** includes a processor **204** and associated database **206** and communications module **208**. The database **206** can store data relating to various applications that can be drawn upon by users, including third party applications, data relating to the users and friends, data for stored programs and other stored data that can be used in the social network. The processor **204** is operative with the database **206** and the communications module **208** and processes data for a user interface to be used by different users, Instant Messaging applications in one non-limiting example, third party applications, such as Facebook™ mark-up language applications and other social network functions. Data is transmitted to and from different users through the communications module **208** as part of the social network server **202** through the communications network **220** to the first user **210**, second user **222** and various third party users **224**. The communications network **210** could be a wireless communications network and the different users could use portable wireless communications devices or personal computers as part of their office or business. The communications network **210** could also be a wireless network that communicates with a public switched telephone network.

The social network server **202** could be formed from a plurality of different servers, with each server having one or more processors, one or more databases and one or more communications modules. Load balancing could be used when different servers are employed. It should also be understood that different users can communicate with each other through the communications network and incorporate Instant Messaging functionality using an Instant Messaging server **230** and operating through the communications network to each other. Functionality for a blocking request from a first user can be incorporated into an Instant Messaging server **230** (which could be part of the social network server as illustrated or separate therefrom) and having Instant Messaging functionality.

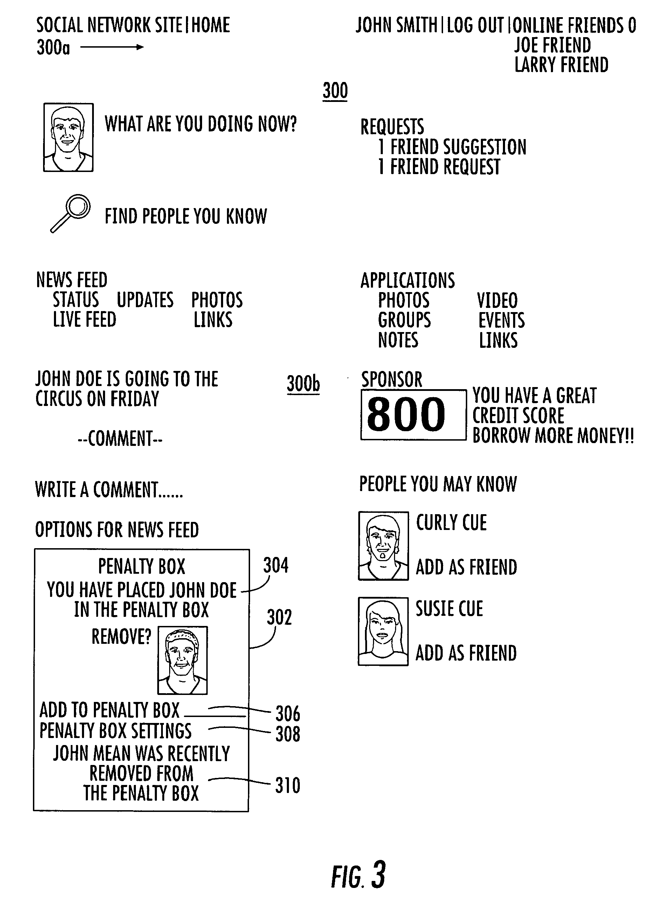

FIG. 3 shows an example of a user interface that is established by a social network site that transmits data to a user device to display a social network wall depicting a user interface at **300** that includes the various user interactions and display of information for the social network site. For example, the name of the user could be displayed with logout information and a listing of on-line friends such as shown as the top portion at **300a** and in this example listing Joe Friend and Larry Friend as "friends. " This could be followed by general information such as requests for friend suggestions or friend requests and a line for "what are you doing now." Other applications and news feeds and comments are shown including some advertising by a sponsor shown at **300b.**

A penalty box **302** is shown at the bottom left and displays information regarding the users that are placed in the penalty box such that communications to the first user from the second user cannot be posted to third party users and to the first user if the first user elects not to view them. For example, a first data item in the penalty box **302** could be information concerning the identity of the person placed in the penalty box and whether that person should be removed (**304**). A picture of that person could be displayed. At line **306,** any individual that should be added to the penalty box can be listed. Penalty box settings are set at line **308** and the user can use the user interface at line **308** to establish predetermined criteria of what types of communications should be blocked. Line **310** shows basic information concerning which person was recently removed from the penalty box such as John Mean.

It should be understood that the method and system as described typically incorporates software such as part of a social network platform software, for example, a Facebook™ platform, that provides a framework for different third party developers to create applications that interact with the core Facebook™ features. For example, 1 in accordance with non-limiting examples, the blocking feature as described could be incorporated as a third party application that uses the Facebook™ Mark-up Language (FBML) with an extension to HTML, Different tag sets can be supported and used with the blocking feature as described such as different social data tags, sanitization tags, design tags, component tags and control tags.

In one aspect, the Facebook™ Mark-up Language can use the extension and tags with mark-up tags and procedural tags that include UI elements such that different users can be identified with a UID (User Identifier). Specific users could view communications posted made by a particular second user that has been determined to have inappropriate postings. For example, a graphic could be displayed that appears as a penalty box in which the second user is placed. This graphic could be displayed only to that second user that has been found to post offending messages, or the graphic could be displayed to one or both the first user and second user. If the first user wants a more public humiliation, the graphic for the penalty box with the second user displayed in the penalty box could be displayed also to third party users, Also, an application could be implemented in which the first user could select, specific friends or other users with specific UID's to view the penalty box,

One advantageous aspect is the first user deciding when a second user has objectionable behavior or communications in the social network and must be placed in the penalty box, There have been some proposals for curtailing objectionable behavior in a web-based social network in which actions of users of the social network are monitored by the social network system itself for objectionable behavior. In those systems, a policy is determined based on the behaviors and warnings issued. A user's account be suspended. The social network system itself takes corrective action if a threshold is exceeded, This is different from the system and method as described above in which the first user that has implemented the wall objects to the behavior of a second user and places the second user in the penalty box.

It should be understood that social content can be used with social data tags, which can retrieve and format data to an application or a specific user making a request. An example is the blocking request having data that takes many forms, such as including specific user information, group information or even photos such as of a penalty box. A social data tag can identify and render a user's name in different ways.

Sanitisation tags can be used with different users that each may have different standards. Some users may want to sanitize or remove certain HTML tags, such as used by a second user that has objectionable behavior. A first user can define specific design tags to define the look of the page of a penalty box. Component tags can be used for allowing user interaction, for example, the second user interacting with one of at least the first user and third party users according to the rules of a penalty box status. For example, only certain types of messages could be posted or messages posted only at certain times of the day. Control tags could be used to allow other users to show content only to the owner of an application profile box. Thus, the penalty box could be hid from other third party users and displayed to the second party user and first party use or just the first party user. Control tags could be used for such a purpose.

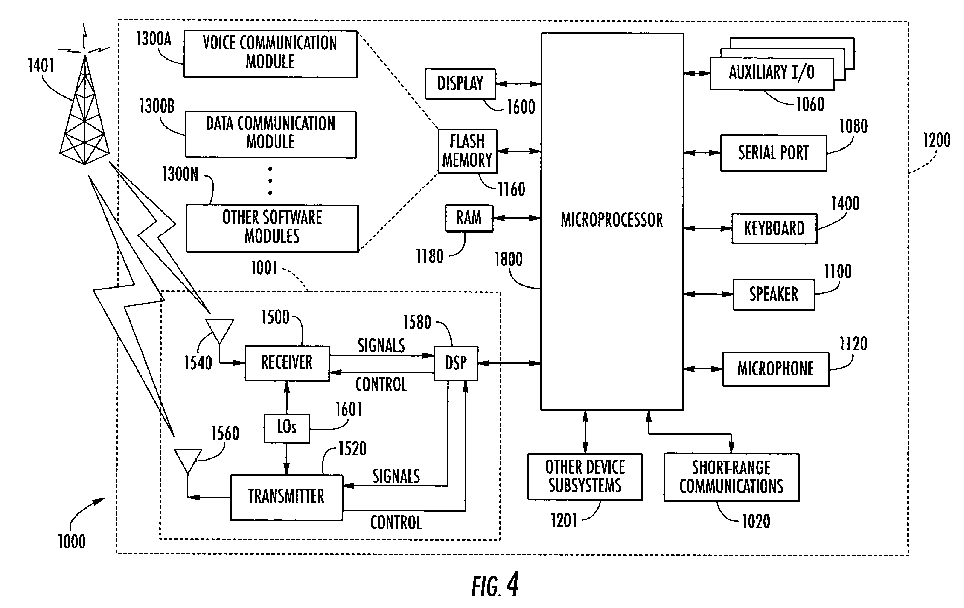

Example components of a hand-held mobile wireless communications device **1000** that may be used in accordance the system as described in FIGS. 1-3 is further described in the example below with reference to FIG. 4. The device **1000** illustratively includes a housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000**, in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180,** Communications signals received by the mobile device may also be stored in the RAM **1180**.

The processing device **1800**, in addition to its operating system functions, enables execution of software applications **1300A-1300N** on the device **1000.** A predetermined set of applications that control basic device operations, such as data and voice communications **1300A** and **1300B,** may be installed on the device 1000 during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with the device user's corresponding data items stored or associated with a host computer system.

Communication functions, including data and voice communications, are performed through the communications subsystem 1001, and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device 1000 may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device 1000 may send and receive communications signals over the communication network **1401.** Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control processes implemented in the DSP **1580.**

In a data communications mode, a received signal, such as a text message or web page download, is processed by the communications subsystem 1001 and is input to the processing device **1800**. The received signal is then further processed by the processing device 1800 for an output to the display **1600,** or alternatively to some other auxiliary I/O device 1060. A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100**, and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the system and method will come to the mind of one skilled in the art having the benefit of the teachings presented in the foregoing descriptions and the associated drawings. Therefore, it is understood that the described system and method are not to be limited to the specific embodiments disclosed, and that modifications and embodiments are intended to be included within the scope of the appended claims.

## Claims

1. A method for blocking objectionable communications in a social network, comprising:
transmitting data from a communications module of a social network server to communications devices to display a user interface on the communications devices and post communications between a first and second user that are viewed by third party users of the social network;
determining when communications from the second user that are posted and displayed and viewed by third party users are objectionable based on predetermined criteria established by the first user, and in response, blocking at the social network server further display of communications from the first user to the second user that can be viewed by third party users; and
displaying on a user interface of the first user a penalty box indicating that the second user is no longer able to post communications intended from the second user to the first user.

2. The method according to Claim 1, wherein the second user is an approved user designated by the first user to display communications to the third party users.

3. The method according to Claim 1, wherein the third party users are approved users designated by the first user.

4. The method according to Claim 1, and further comprising blocking the second user for a predetermined period of time and allowing further display of communications from the second user to the first user to be viewed by the third party users after the predetermined period of time has passed.

5. The method according to Claim 1, and further comprising indicating to the second user that the communications to the first user that are intended to be displayed to other third party users have been blocked.

6. The method according to Claim 1, wherein communications between first and second users comprise instant messaging communications.

7. A communications system, comprising:
a social network server that is configured to provide a user interface for a social network and allowing a first user to receive communications from a second user that are displayed and viewed by third party users of the social network; and
a communications module that communicates with the first and second users and third party users and receives a blocking request from the first user and communicates the blocking request to the social network server for blocking further display to the third party users of communications from the second user to the first user that are intended to be displayed and viewed by the third party users after the first user has determined that the communications from the second user are objectionable.

8. The system according to Claim 7, wherein the second user is an approved user designated by the first user to display communications to the third party users.

9. The system according to Claim 7, wherein the approved third party users are approved users designated by the first user.

10. The system according to Claim 7, wherein said social network server is operative with the communications module for blocking the second user for a predetermined period of time and allowing further display of communications from the second user to the first user to be viewed by the third party users after the predetermined period of time has passed.

11. The system according to Claim 7, wherein said social network server is operative with the communications module for indicating to the second user that their communications to the first user and that are intended to be displayed to other third party users have been blocked.

12. The system according to Claim 7, wherein the communications between first and second users comprise instant messaging communications.

13. A computer program product, comprising a computer usable medium having a computer readable program code embodied therein, said computer readable program code adapted to be executed to implement a method for blocking objectionable communications in a social network, comprising:
providing a module that is configured to provide a user interface for a social network and allowing a first user to receive communications from a second user that are viewed by third party users of the social network; and
a module for blocking further display of communications from the second user to the first user that were intended by the second user to be displayed and viewed by third party users of the social network after the module has determined that the communications from the second user are objectionable based on predetermined criteria.

14. The computer program product according to Claim 13, wherein the program is operable for blocking the second user for a predetermined period of time and allowing further display of communications from the second user to the first user to be viewed by the third party users after the predetermined period of time has passed.

15. The computer program product according to Claim 13, wherein the program is operable for processing instant messaging communications.

## Amended claims

### Amended claims in accordance with Rule 137(2) EPC.

**1.** A method for automatically blocking objectionable communications in a social network (200), comprising:
transmitting data from a communications module (208) of a social network server (202) to communications devices to display a user interface on the communications devices and post communications of the social network, wherein said social network server comprises a database (206) that stores data relating to predetermined criteria concerning the communications that are considered objectionable, and a processor (204) that determines when the communications are objectionable based on the predetermined criteria stored in the database;
processing messages at the processor and determining when communications that are posted and displayed are objectionable based on predetermined criteria stored in the database, and in response, automatically blocking at the social network server further display of communications that can be viewed; and
displaying on a user interface a penalty box (302) indicating that objectionable communications cannot be posted.

**2.** The method according to claim 1, wherein post communications of the social network comprises post communications between a first and second user that are viewed by third party users of the social network; and further including
determining when communications from the second user that are posted and displayed and viewed by third party users are objectionable based on predetermined criteria established by the first user, and in response, blocking at the social network server further display of communications from the first user to the second user that can be viewed by third party users; and
displaying on a user interface of the first user a penalty box indicating that the second user is no longer able to post communications intended from the second user to the first user.

**3.** The method according to Claim 2, wherein the second user is an approved user designated by the first user to display communications to the third party users.

**4.** The method according to Claim 2, wherein the third party users are approved users designated by the first user.

**5.** The method according to Claim 2, and further comprising blocking the second user for a predetermined period of time and allowing further display of communications from the second user to the first user to be viewed by the third party users after the predetermined period of time has passed.

**6.** The method according to Claim 2, and further comprising indicating to the second user that the communications to the first user that are intended to be displayed to other third party users have been blocked.

**7.** The method according to Claim 2, wherein communications between first and second users comprise instant messaging communications.

**8.** A communications system (200), comprising:
a social network server (202) that is configured to provide a user interface for a social network to receive communications that are displayed, wherein said social network server comprises a database (206) that stores data relating to predetermined criteria concerning the communications that are considered objectionable, and a processor (204) that determines when the communications are objectionable based on the predetermined criteria stored in the database; and
a communications module (208) that communicates and receives a blocking request from the processor and automatically blocks further display of communications that are intended to be displayed after the processor has determined that the communications are objectionable based on the predetermined criteria stored in the database.

**9.** The system according to claim 8, wherein the social network server is configured to allow a first user to receive communications from a second user that are displayed and viewed by third party users of the social network; and in which the communications module communicates with the first and second users and third party users and receives a blocking request from the first user and communicates the blocking request to the social network server for blocking further display to the third party users of communications from the second user to the first user that are intended to be displayed and viewed by the third party users after the first user has determined that the communications from the second user are objectionable.

**10.** The system according to Claim 9, wherein the second user is an approved user designated by the first user to display communications to the third party users.

**11.** The system according to Claim 9, wherein the approved third party users are approved users designated by the first user.

**12.** The system according to Claim 9, wherein said social network server is operative with the communications module for blocking the second user for a predetermined period of time and allowing further display of communications from the second user to the first user to be viewed by the third party users after the predetermined period of time has passed.

**13.** The system according to Claim 9, wherein said social network server is operative with the communications module for indicating to the second user that their communications to the first user and that are intended to be displayed to other third party users have been blocked.

**14.** The system according to Claim 9, wherein the communications between first and second users comprise instant messaging communications.
